# EUROPEAN PATENT APPLICATION

(11) **EP 2 818 981 A1**
(43) Date of publication of application: **31.12.2014**
(21) Application number: 13174427.8
(22) Date of filing: 28.06.2013
(51) Int. Cl.: G06F 3/0354

(54) **Method and apparatus pertaining to switching stylus transmissions between stylus-modality signals and non-stylus-modality signals**

(71) Applicant: BlackBerry Limited, Waterloo, ON N2K 0A7 (CA)
(72) Inventor: Mercea, Cornel, Waterloo, Ontario, N2L 3W8 (CA); Carkner, Donald Edward, Waterloo, Ontario, N2L 3W8 (CA); Pipilas, Stephanos, Waterloo, Ontario, N2L 3W8 (CA)
(74) Representative: Greenaway, Martin William

(57) **Abstract**

A stylus comprises a barrel having a scribing nib disposed at one end thereof. The barrel supports at least one user interface. A control circuit operably couples to this control surface and to a wireless transmitter and is configured to selectively switch between transmitting stylus-modality signals via the wireless transmitter in response to the user interface and transmitting non-stylus-modality signals via the wireless transmitter in response to the user interface. The control circuit can automatically switch between using the user interface to enrich and functionally expand usability of the stylus as a penstyled scribing tool on the one hand and as a remote-control device to control functionality of an unrelated application on the other hand. By one approach, the control circuit switches between these states as a function, at least in part, of proximity of the stylus to the scribing surface.

## Description

### Field of Technology

The present disclosure relates to styli employed as a user interface to a corresponding electronic device.

### Background

Various styli are known and typically serve in conjunction with a scribing surface that is configured to work with a corresponding stylus. (As used herein, the word "scribing" will be understood to refer to the temporary physical placement of a writing instrument on a writing surface whether for the purpose of writing on the writing surface or for otherwise inputting information, instructions, and/or selections.) Generally speaking, a stylus is typically a hand-held writing utensil that often (but not exclusively) has a pencil-like elongated form factor and that includes at least one pointed end configured to interact with the scribing surface. Using a stylus as an input mechanism with, for example, a display offers a variety of advantages over a fingertip including the opportunity for increased precision as well as an expression modality that accords with the user's own past experience with a pencil or pen.

Some styli include one or more user interfaces such as one or more buttons. Such buttons typically comprise simple "on" and "off" mechanisms by which a user can provide transmissions from the stylus comprising stylus-modality signals. A stylus-modality signal comprises an instruction or parameter that corresponds to primarily using the stylus as a scribing tool. For example, when scribing with the stylus on a scribing surface in order to input a corresponding line of electronic ink, a stylus-modality signal can comprise an instruction to thicken that line or a parameter that sets the line thickness. As another example, when using the stylus as a cursor control user interface (by moving the stylus on a scribing surface in order to control movement of the cursor), a stylus-modality signal can comprise a so-called "right click" or "left click."

While the foregoing components, alone or in various combinations with one another, enable a variety of useful functionality, existing styli do not suit all user's needs in all application settings.

### Brief Description of the Drawings

FIG. 1 is a block diagram in accordance with the disclosure.

FIG. 2 is a perspective view in accordance with the disclosure.

FIG. 3 is a flow diagram in accordance with the disclosure.

FIG. 4 is an action-composite diagram in accordance with the disclosure.

FIG. 5 is an action-composite diagram in accordance with the disclosure.

### Detailed Description

The following describes an apparatus and method pertaining to a stylus that is configured for use with a scribing surface. By one approach the stylus comprises a barrel having a scribing nib disposed at one end thereof. The barrel supports at least one user interface. A control circuit operably couples to this control surface and to a wireless transmitter and is configured to selectively switch between transmitting stylus-modality signals via the wireless transmitter in response to the user interface and transmitting non-stylus-modality signals via the wireless transmitter in response to the user interface.

So configured, for example, the control circuit automatically switches between using the user interface to enrich and functionally expand usability of the stylus as a pen-styled scribing tool on the one hand and as a remote-control device to control functionality of an unrelated application on the other hand.

By one approach, the control circuit switches between these states as a function, at least in part, of proximity of the stylus to the scribing surface. For example, when the stylus is sufficiently close to the scribing surface to presume intended use of the stylus as a scribing tool, the control circuit can presume to employ the user interface in favor of a stylus-input modality. When the stylus is sufficiently distant from the scribing surface, however, the control circuit can presume otherwise.

These teachings are highly flexible in practice and will accommodate, for example, a variety of modifications and combinations. As one example, these teachings will readily serve in combination with a stylus having a plurality of user interfaces. In such a case, the control circuit can automatically switch between the aforementioned states for all of the control surfaces as a group if desired, or only one or some of the control surfaces may be switched as described.

So configured, a user can employ a stylus to enter/apply electronic ink to a corresponding scribing surface (such as a stylus-sensing/tracking display) while accommodating and facilitating using the control surface, for example, to effect dynamic variations to the electronic ink as regards such things as line width, color, texture, pattern, transparency, hue, chroma, and various other stylistic formats and renderings as may be desired. Many users can successfully and creatively employ such a capability with little or no training.

When using their relevant device for other purposes, however, such as a presentation source or a camera, the stylus can serve instead, via that same control surface, as a remote control for an application that does not presume stylus-based input or control.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

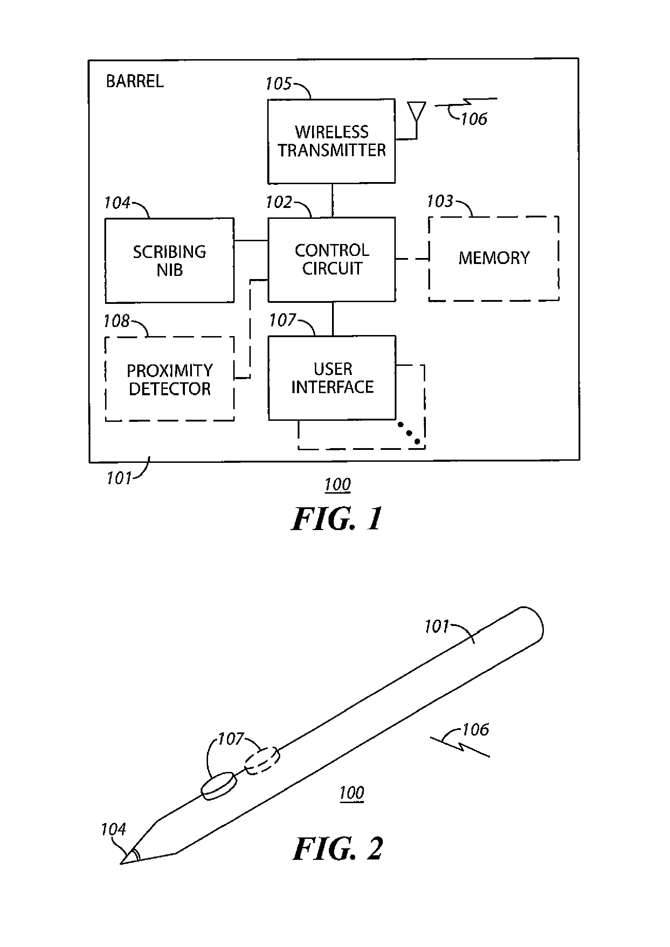

FIGS. 1 and 2 present an example of a stylus 100 that accords at least in part with at least some of these teachings. This stylus 100 includes a barrel 101 that is shaped and sized to be readily grasped and manipulated by at least the average-sized person. This barrel 101 supports (in at least some cases by at least partially containing) a variety of stylus components.

In this illustrative example the stylus components include a control circuit 102. Such a control circuit 102 can comprise a fixed-purpose hard-wired platform or can comprise a partially or wholly programmable platform. These architectural options are well known and understood in the art and require no further description here. This control circuit 102 is configured (for example, by using corresponding programming as will be well understood by those skilled in the art) to carry out one or more of the steps, actions, and/or functions described herein.

By when approach (when, for example, the control circuit 102 comprises a wholly or partially-programmable component) the control circuit 102 can optionally operably couple to a memory 103. The memory 103 may be integral to the control circuit 102 or can be physically discrete (in whole or in part) from the control circuit 102 as desired. This memory 103 can serve, for example, to non-transitorily store the computer instructions that, when executed by the control circuit 102, cause the control circuit 102 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

This stylus 100 has a scribing nib 104 disposed at one end of the barrel 101. (These teachings will readily accommodate having a scribing nib at both ends of the barrel. For the sake of simplicity, however, this description presumes only one scribing nib.) Scribing nibs are well known in the art and include a variety of passive and active assemblies. Generally speaking, the scribing nib physically interacts with a scribing surface. By tracking the location and movement of the scribing nib with respect to the scribing surface, the user can enter a line of rendered electronic ink on a corresponding display. (The display is often one with the scribing surface but other paradigms are known in the art in these regards.) Scribing nibs comprise a well-understood area of prior art endeavor. Therefore, for the sake of brevity further details in these regards are not presented here.

The stylus 100 also includes a wireless transmitter 105 that operably couples to the control circuit 102. This wireless transmitter 105 can serve, for example, to transmit wireless signals 106 representing data developed by the stylus 100 during scribing use. This data can include, for example, nib-force data (when using a force-sensing nib), stylus-tilt data, and other data as described herein as may be desired. For many application settings it will serve for the wireless transmitter 105 to utilize a radio-frequency carrier. Various short-range methodologies, such as Bluetooth^{™}, are well known in the art and will serve well in these regards. These teachings will accommodate other approaches in these regards, however, including but not limited to the use of optical carriers (including infrared light carriers), ultrasonic carriers, and so forth.

These teachings also provide for one or more user interfaces 107. As illustrated in FIG. 2, by one approach such a user interface 107 can comprise a push button if desired. These teachings will readily accommodate numerous other possibilities in these regards as well as desired.

Such a user interface 107 can be located where desired on the barrel 101. In many cases it will serve well if the user interface 107 is located where a user's finger can readily engage the user interface 107 even when otherwise holding and scribing with the stylus 100 in ordinary course of usage.

By one optional approach the stylus 100 can further include a proximity detector 108 that also operably couples to the control circuit 102. This proximity detector 108 can serve to detect when, for example, the stylus 100 physically contacts a corresponding scribing surface. If desired, this proximity detector 108 can also detect when the stylus is within some predetermined range (such as two centimeters, four centimeters, or some other distance of interest) of the scribing surface though not necessarily in physical contact therewith. A variety of approaches to proximity detection are known in the art including methodologies based upon emitted/received radio-frequency signals, sound (such as ultrasonic sound), light (including both visible and non-visible wavelengths, radio-frequency-based induction, and so forth (including combinations of such approaches). As the present teachings are not overly sensitive to any particular selection made in these regards, further elaboration in these regards is not provided here.

In some cases, the scribing nib 104 itself can double as such a proximity detector 108. For example, by one approach the scribing nib 104 can serve to detect the capacitive coupling that occurs when the scribing nib 104 is suitably close to a corresponding scribing surface.

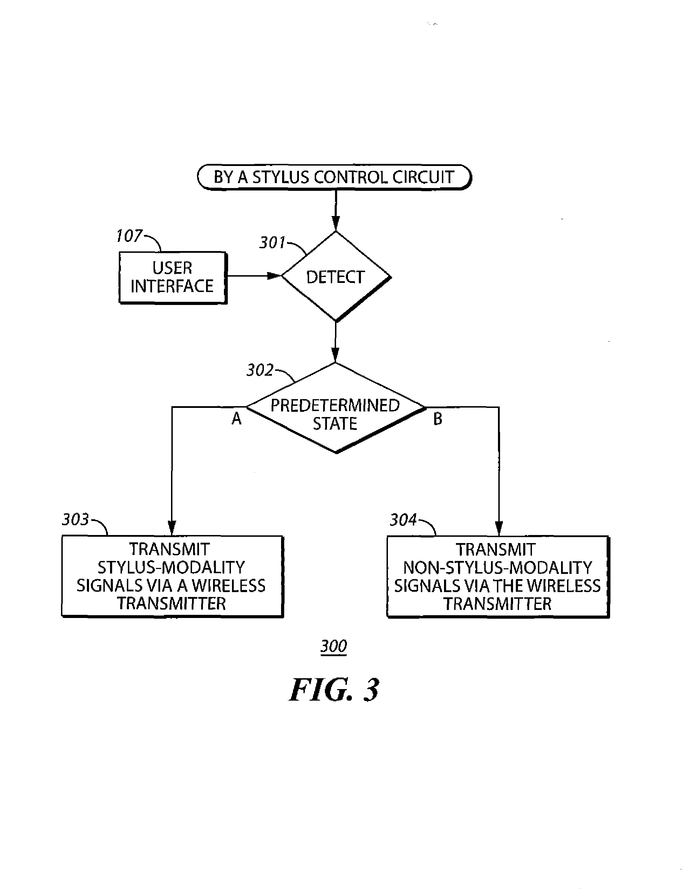

Such a stylus 100 can serve in a variety of ways. FIG. 3 presents a few illustrative examples in these regards. It will be understood that no particular limitations are intended by way of the specificity of these examples.

Per this process 300 the aforementioned control circuit 102 detects, at block 301, a user's interaction with the aforementioned user interface 107. This detection can comprise, for example, detecting the momentary closure of a push button or the momentary application of force to a piezoelectric material.

At block 302 the control circuit 102 determines which of a plurality of predetermined states currently prevails for the stylus 100. In this illustrative example the control circuit 102 determines which of two states (denoted "A" and "B" in FIG. 3) correctly characterizes the present operating circumstances of the stylus 100. These two states correspond to when the stylus 100 is proximal to a corresponding scribing surface (i.e., in physical contact with that surface and/or within some specific distance, such as 2 to 4 centimeters, of the surface) (represented here by state "A") and when the stylus 100 is other than proximal to the corresponding scribing surface (represented here by state "B").

It will be understood that these teachings are not limited to differentiating between only two such states. Instead, these teachings are highly scalable and will accommodate essentially any number of states as may be desired. Examples of possibly useful states include a hovering state, a stylus-tilt state, a stylus-rotation state, a stylus-inversion state, and so forth.

The control circuit 102 then takes an appropriate corresponding action as a function of the detected state. In this illustrative example, when the detected state represents that the stylus 100 is proximal to its scribing surface (and therefore implying that the stylus 100 is being used as a "stylus" to scribe upon the scribing surface), at block 303 the control circuit 102 serves to use the aforementioned wireless transmitter 106 to transmit stylus-modality signals.

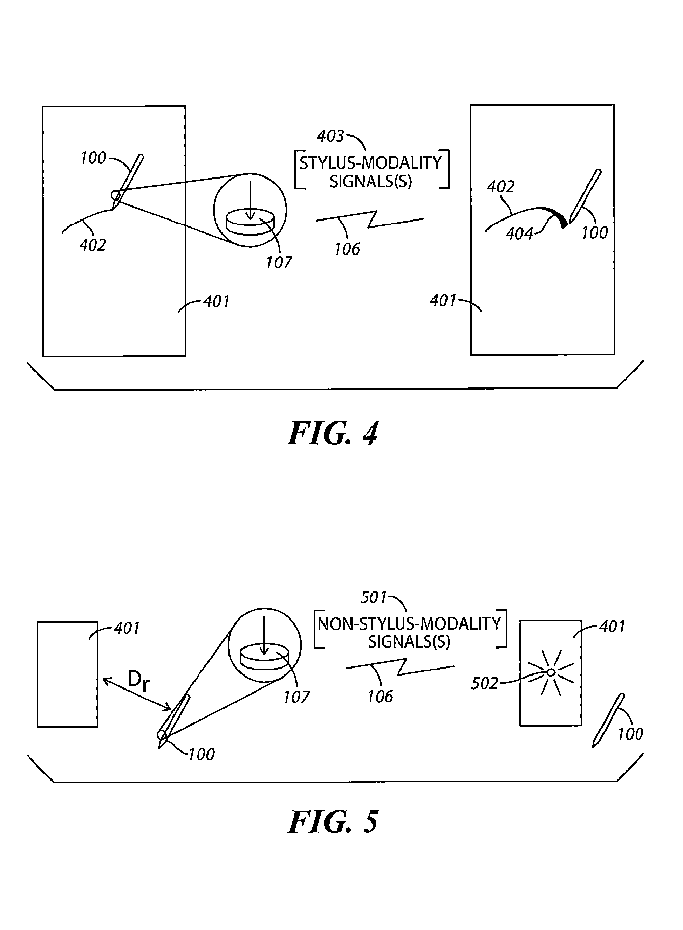

FIG. 4 offers an illustrative example in these regards. In this example, the stylus 100 physically contacts a scribing surface 401 as the user scribes on that surface 401 to draw a line 402 of electronic ink. As the user scribes with the stylus 100 the user asserts the user interface 107. Given these operating circumstances the control circuit 102 causes the transmission of one or more stylus-modality signals 403. Here, the stylus-modality signal 403 serves to cause the thickness of the rendered line 402 of electronic ink to be increased as denoted by reference numeral 404.

Accordingly, upon determining that the stylus 100 is being used as a stylus to scribe upon a scribing surface 401 the control circuit 102 automatically provides for responding to assertion of the control surface 107 in a way that corresponds to that use of the stylus 100 as a scribing instrument.

When the detected state represents that the stylus 100 is not proximal to its scribing surface (and therefore implying that the stylus 100 is not presently being used as a "stylus" to scribe upon the scribing surface), at block 304 the control circuit 102 serves to use the aforementioned wireless transmitter 106 to transmit one or more non-stylus-modality signals.

FIG. 5 offers an illustrative example in these regards. In this example, the device (which might comprise, for example, a portable communication device such as a so-called smartphone or a tablet/pad-styled computer) that includes the scribing surface 401 is presently running a camera application. Because the stylus 100 is a distance Dᵣ that exceeds a threshold proximity distance, the control circuit 102 concludes that the stylus 100 is not serving in a stylus mode of usage. Accordingly, when the user now asserts the user interface 107, the control circuit 102 responds instead by having the wireless transmitter 106 transmit one or more non-stylus-modality signals 501. In this example, the camera application responds to that non-stylus-modality signal 501 by capturing an image as represented by reference numeral 502.

Accordingly, upon determining that the stylus 100 is not being used as a stylus to scribe upon a scribing surface 401 the control circuit 102 automatically provides for responding to assertion of the control surface 107 in a way that corresponds to that use of the stylus 100 as other than a stylus. In this case, the control circuit 102 employs the stylus 100 as a remote control device to remotely control the current functionality of a non-stylus-based application being run by the device that includes the scribing surface with which the stylus 100 ordinarily interacts.

So configured, a stylus can readily leverage the availability of a user interface in favor of functionality not ordinarily associated with stylus-based interfacing. By automatically basing the immediate interpretation of a user's assertion of such a control surface upon detected circumstances that evidence whether the stylus is presently being used as a stylus the user is spared corresponding training and/or analysis that might otherwise be required to effect such flexibility and capability.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A stylus configured for use with a scribing surface, the stylus comprising:
a barrel;
a scribing nib disposed at one end of the barrel;
a wireless transmitter at least partially disposed within the barrel;
at least one user interface supported by the barrel;
a control circuit operably coupled to the wireless transmitter and the user interface, the control circuit configured to selectively switch between transmitting stylus-modality signals via the wireless transmitter in response to the user interface and transmitting non-stylus-modality signals via the wireless transmitter in response to the user interface.

2. The stylus of claim 1 wherein the at least one user interface comprises a pushbutton switch.

3. The stylus of claim 1 wherein the at least one user interface comprises at least two user interfaces.

4. The stylus of claim 1 wherein the wireless transmitter comprises a radio-frequency transmitter.

5. The stylus of claim 1 wherein the non-stylus-modality signals comprise remote-control signals.

6. The stylus of claim 5 wherein the remote-control signals control functionality of an application being run by an apparatus that includes the scribing surface.

7. The stylus of claim 1 wherein the control circuit is configured to switch between transmitting the stylus-modality signals and the non-stylus-modality signals as a function, at least in part, of proximity of the stylus to the scribing surface.

8. The stylus of claim 1 wherein the scribing surface comprises a part of a portable communication device.

9. A method:
by a control circuit that comprises a part of a stylus:
selectively switching between transmitting stylus-modality signals via a wireless transmitter in response to a user interface and transmitting non-stylus-modality signals via the wireless transmitter in response to the user interface.

10. The method of claim 9 wherein the at least one user interface comprises a pushbutton switch.

11. The method of claim 9 wherein the at least one user interface comprises at least two user interfaces.

12. The method of claim 9 wherein the wireless transmitter comprises a radio-frequency transmitter.

13. The method of claim 9 wherein the non-stylus-modality signals comprise remote-control signals.

14. The method of claim 9 wherein switching between transmitting the stylus-modality signals and the non-stylus-modality signals comprises switching as a function, at least in part, of proximity of the stylus to a scribing surface.
